# EUROPÄISCHE PATENTANMELDUNG

(11) **EP 4 092 262 A1**
(43) Veröffentlichungstag der Anmeldung: **23.11.2022**
(21) Anmeldenummer: 22173895.8
(22) Anmeldetag: 17.05.2022
(51) Int. Cl.: F03D 3/00, F03D 9/00, H02S 10/12

(54) **HYBRIDKRAFTANLAGE**

(30) Priorität: 17.05.2021 DE 102021112649
(71) Anmelder: Suchal, Marian, 81106 Bratislava (SK)
(72) Erfinder: Suchal, Marian, 81106 Bratislava (SK)
(74) Vertreter: noventive Patentanwaltsgesellschaft mbH

(57) **Zusammenfassung**

Die Erfindung betrifft eine Hybridkraftanlage aufweisend einen Windradrotor mit mindestens zwei an dem Windradrotor befestigten Windradflügeln, welche zumindest teilweise mit Photovoltaikmodulen belegt sind, einen Elektromotor mit einem Elektromotorstator und einem Elektromotorrotor, wobei der Elektromotorstator fest mit dem Windradrotor gekoppelt ist, und der Elektromotorrotor mit einem Sockel des Windrades gekoppelt ist, einen Generator mit einem Generatorstator und einem Generatorrotor, wobei der Generatorstator fest mit dem Sockel des Windrades gekoppelt ist, und der Generatorrotor mit dem Windradrotor gekoppelt ist, wobei die Photovoltaikmodule eingerichtet sind, den Elektromotor zu speisen, um den Windradrotor anzutreiben, und wobei der Generator eingerichtet ist, die Drehung des Windradrotors in elektrische Energie umzusetzen.

## Beschreibung

### Technisches Gebiet

Die Erfindung handelt von einer Hybridkraftanlage zur Erzeugung von Strom aus regenerativen Energien wie Sonne und Wind.

### Hintergrund

Die Erfindung geht aus von einer Hybridkraftanlage nach der Gattung des Hauptanspruchs.

Durch den aufgrund des Klimawandels bedingten Zwang zur Dekarbonisierung der Energieerzeugung werden Anlagen, welche Strom aus regenerativen Energien wie Wind und Sonne generieren, zunehmend wichtiger. Der Zubau an Photovoltaik- und Windkraftanlagen hat in den letzten Jahren immer weiter zugenommen, und es ist kein Ende dieses Trends absehbar.

Bekannt sind vor allem große Anlagen; es werden bei Photovoltaikanlagen, im Folgenden auch als PV-Anlagen bezeichnet, große Flächen überbaut, teilweise auf Industriegebäuden, aber auch auf Freiflächen werden große Anlagen installiert. Auch bei Windkraftanlagen geht der Trend zu immer größeren Anlagen, die auf immer höheren Sockeln installiert werden und immer mehr elektrische Leistung erzeugen können. Die aktuell größten Windkraftanlagen können bis zu 4,6MW elektrische Leistung erzeugen und sind auf Sockeln von über 160m Höhe installiert. Diese Anlagen stehen vor allem in Küstennähe, wo viel und oft Wind weht, und der Ausnutzungsgrad der Anlage dementsprechend hoch ist.

Hierbei zeigt sich aber das Problem, dass die elektrische Energie einerseits dort erzeugt wird, wo sie nur zum Teil gebraucht wird, und andererseits, vor allem bei PV-Anlagen, viel Platz benötigt wird, der für solche Projekte immer weniger zur Verfügung steht.

Daher ist derzeit ein weiterer Trend zu verzeichnen, nämlich die dezentrale Energieerzeugung. Idee ist hier, dass die Energie möglichst dort erzeugt wird, wo sie auch gebraucht wird, um möglichst wenige Stromtrassen für die Durchleitung der elektrischen Energie ausbauen zu müssen. Die private PV-Anlage auf dem Hausdach erfreut sich immer größerer Beliebtheit, kann aber nur tagsüber elektrische Energie liefern. Windkraftanlagen oder Windräder sind im privaten Bereich weit weniger verbreitet, obwohl gerade bei Wetterbedingungen, die für die PV-Anlagen nicht ideal sind, oft viel Wind weht, wodurch mit einer kleinen Windkraftanlage zusätzlich zur PV-Anlage die häusliche Stromversorgung deutlich gleichmäßiger gestaltet werden könnte.

Bei den Windkraftanlagen hat sich das Konzept mit einem Rotor mit drei Windradflügeln, die ein Profil eines Flugzeugflügels aufweisen, mittlerweile durchgesetzt. Es werden nahezu alle Anlagen nach diesem Prinzip gebaut. Bei kleinen Windkraftanlagen gibt es viele verschiedene Konzepte, die alle bestimmte Vor- und Nachteile haben. Neben den drei- oder mehrblättrigen Rotoren nach dem Vorbild der großen Anlagen gibt es eine Vielzahl an alternativen Konzepten, die derzeit ebenfalls am Markt zu finden sind. Da in bewohnten Gebieten die Lärmbelästigung ein wichtiges Kriterium ist, ist der Rotor nach dem Vorbild der großen Anlagen nicht immer die beste Lösung.

Als alternative Konzepte seien hier der Darrieus-Rotor, der Flettner-Rotor und der davon abgeleitete Savonius-Rotor sowie der Klappblatt-Rotor genannt. Der Savonius Rotor ist eine recht einfach herzustellende Konstruktion, die sich deshalb bei Kleinwindkraftanlagen einer gewissen Beliebtheit erfreut. Ähnlich wie der Flettner Rotor benötigt er aber zum Anlaufen bei wenig Wind externe Unterstützung. Dies ist ein Nachteil, der diesen Rotortyp an einer weiteren Verbreitung hindert. Weiterhin ist im privaten Bereich der Platz sehr begrenzt, womit PV-Anlagen und Windkraftanlagen gegenseitig im Wettbewerb stehen.

### Aufgabe

Es ist Aufgabe der Erfindung, eine Hybridkraftanlage anzugeben, die auch bei leichtem Wind gut funktioniert, und die obigen Nachteile nicht mehr aufweist, bzw. die Vorteile von PV-Anlagen und Windkraftanlagen in sich vereint.

### Darstellung der Erfindung

Die Lösung der Aufgabe erfolgt erfindungsgemäß mit einer Hybridkraftanlage aufweisend einen Windradrotor mit mindestens zwei an dem Windradrotor befestigten Windradflügeln, welche zumindest teilweise mit Photovoltaikmodulen belegt sind, einen Elektromotor mit einem Elektromotorstator und einem Elektromotorrotor, wobei der Elektromotorstator fest mit dem Windradrotor gekoppelt ist, und der Elektromotorrotor mit einem Sockel des Windrades gekoppelt ist, einen Generator mit einem Generatorstator und einem Generatorrotor, wobei der Generatorstator fest mit dem Sockel des Windrades gekoppelt ist, und der Generatorrotor mit dem Windradrotor gekoppelt ist, wobei die Photovoltaikmodule eingerichtet sind, den Elektromotor zu speisen, um den Windradrotor anzutreiben, und wobei der Generator eingerichtet ist, die Drehung des Windradrotors in elektrische Energie umzusetzen.

Der Windradrotor ist hierbei bevorzugt ein Savonius Rotor. Der Windradrotor kann aber auch jede andere Form eines Windradrotors sein, zum Beispiel ein klassischer Dreiblattrotor, wie er in mittlerweile der überwiegenden Anzahl der Windkraftanlagen Verwendung findet, oder ein Darrieusrotor. Grundsätzlich ist jede Rotorform denkbar, da auch gewölbte Flächen mit modernen Photovoltaikzellen überzogen werden können. Selbstverständlich ist auch jede Hybridform von Windradrotor möglich.

Eine so konstruierte Hybridkraftanlage verbindet vorteilhaft die Vorteile einer Photovoltaikanlage mit den Vorteilen einer Windkraftanlage, da die Flügelfläche nicht nur als Strömungsführungsfläche dient, sondern ebenfalls als Fläche für Photovoltaikzellen, die zusätzliche Energie aus der Sonnenstrahlung generieren.

Die abhängigen Ansprüche bilden den zentralen Gedanken der Erfindung in besonders vorteilhafter Weise weiter.

In einer besonders vorteilhaften Ausführungsform sind die Photovoltaikmodule elektrisch ausschließlich mit dem Elektromotor verbunden. Das bedeutet, dass die durch die Photovoltaikmodule gewonnene Energie nur zum Antreiben des Elektromotors verwendet wird. Eine direkte Einspeisung der gewonnenen elektrischen Energie in den Generator erfolgt nicht. Durch diese Anordnung werden die Photovoltaikmodule also dazu verwendet, den Elektromotor in Rotation zu versetzen, bzw. die Rotation des Elektromotors zu unterstützen bzw. die Rotationsgeschwindigkeit des Elektromotors zu erhöhen.

Vorteilhaft kann zur Steuerung der elektrischen Verbindung der Photovoltaikmodule mit dem Elektromodul eine Schaltvorrichtung, beispielsweise ein Relais, vorgesehen sein. So kann, beispielsweise abhängig von einer Sonneneinstrahlung bei Dämmerung oder schwankender Intensität, die Unterstützung der Elektromotordrehung durch die elektrische Energie aus den Photovoltaikmodulen zu oder abgeschaltet werden. Auf diese Weise kann der Elektromotor erst bei optimaler Spannung aktiviert werden. Gleichermaßen kann der Elektromotor auf diese Weise bei kritischen Spannungsschwankungen durch Regelung weniger strapaziert werden.

Durch geeignetes Vorsehen von Relais an einzelnen Photovoltaikmodulen oder Gruppen von Modulen kann so auch dem Abschattungseffekt der Module allein aufgrund der Drehbewegung der Windkraftanlage, begegnet werden.

Anders ausgedrückt ist in einer bevorzugten Ausführungsform der Erfindung der Elektromotor zum Antreiben des Windradautors elektrisch mit den Photovoltaikmodulen verbunden, während der Generator zur Einspeisung der gewonnenen Energie ins Stromnetz bzw. zur Speicherung elektrisch nicht mit den Photovoltaikmodulen verbunden ist, also verbindungsfrei ist.

In einer Ausführungsform kann zwischen dem Windradrotor und dem Generatorrotor ein Getriebe zur Drehzahlanpassung angeordnet sein. Dies bietet den Vorteil, dass der Generator mit angepasster Geschwindigkeit und damit mit einem höheren Wirkungsgrad betrieben werden kann.

In einer anderen Ausführungsform ist zwischen dem Elektromotorrotor und dem Sockel ein Getriebe zur Drehzahlanpassung angeordnet. Dies bietet ebenfalls den Vorteil eines besseren Wirkungsgrades hier des Elektromotors bei Betrieb mit Solarenergie.

In einer weiteren bevorzugten Ausführungsform ist der Windradrotor vertikal angeordnet. Dies bietet den Vorteil einer guten Platzausnutzung.

In einer bevorzugten Ausführungsform ist der Windradrotor horizontal angeordnet. Dies bietet den Vorteil eines besseren Einstrahlwinkels der Sonne auf die Photovoltaikzellen, um mehr Energie bereitstellen zu können.

In einer weiteren bevorzugten Ausführungsform ist der Elektromotor an der Oberseite bzw. einer Seite des Windradrotors angeordnet, und der Generator an der Unterseite bzw. an der anderen Seite des Windradrotors angeordnet. Diese Konstruktion ist vorteilhaft besonders einfach und kostengünstig herzustellen und kann robust und wartungsarm gebaut werden.

Bevorzugt erfolgt die Kopplung zwischen Elektromotorrotor und Sockel dabei über eine Konstruktion, die das Drehmoment des Elektromotors zum Sockel ableitet und Teil des Sockels ist. Durch diese Maßnahme wird die Konstruktion robuster.

In einer anderen Ausführungsform sind der Elektromotor und der Generator direkt übereinander auf der sockelseitigen Seite des Windrades angeordnet, wobei der Generatorrotor fest mit dem Elektromotorstator und der Elektromotorrotor fest mit dem Generatorstator und dem Sockel verbunden ist. Dies ist eine besonders platzsparende Bauweise, die aufgrund der guten Zugänglichkeit an der Unterseite des Windradrotors vorteilhaft besonders wartungsfreundlich ist.

In einer Weiterbildung dieser Ausführungsform sind dabei der Generator, der Elektromotor und der Windradrotor über zwei konzentrisch angeordnete Hohlachsen miteinander verbunden. Dies stellt vorteilhaft eine besonders platzsparende Konstruktion dar.

Der Generator kann hierbei bevorzugt ein Wechselstromgenerator oder ein Gleichstromgenerator sein. Je nach Anwendungsfall kann somit die beste Effizienz ohne weitere Umwandlungsverluste erreicht werden.

Bevorzugte Ausführungsformen finden sich in den abhängigen Ansprüchen und der gesamten Offenbarung, wobei in der Darstellung nicht immer im Einzelnen zwischen Vorrichtungs- und Verwendungsaspekten unterschieden wird; jedenfalls implizit ist die Offenbarung hinsichtlich sämtlicher Anspruchskategorien zu lesen.

Weitere vorteilhafte Weiterbildungen und Ausgestaltungen der erfindungsgemäßen Hybridkraftanlage ergeben sich aus weiteren abhängigen Ansprüchen und aus der folgenden Beschreibung.

Die beschriebenen Konstruktionsmerkmale haben das Ziel, die Drehbewegung des Windradrotors zu beschleunigen und somit die Effektivität der Windanlage zu steigern. Auch das richtige Anbringen der Windflügel kann einen Einfluss auf diese Effektivität haben. Grundsätzlich gilt, um mehr Sonnenenergie auf die Photovoltaik-Paneele zu bringen wird mehr Fläche notwendig.

In einer speziellen Ausführungsform der Erfindung werden 4 Windflügel verwendet. Vorteilhaft können die Windflügel eine Neigung von 45° zur Vertikalen bzw. zur Erstreckungsrichtung der Windkraftanlage aufweisen. Zudem können die Windflügel eine beidseitige Beschichtung mit Photovoltaikpaneelen zur Verbesserung der Effizienz aufweisen. In wenigstens einer Ausführungsform können auch mehrere Reihen von Photovoltaikmodulen untereinander in verschiedenen Neigungswinkeln auf einem Windflügel angebracht werden.

### Kurze Beschreibung der Zeichnungen

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig. 1: eine schematische Darstellung einer ersten Ausführungsform der Hybridkraftanlage,
- Fig. 2: eine schematische Darstellung einer zweiten Ausführungsform der Hybridkraftanlage,
- Fig. 3: eine schematische Darstellung einer dritten Ausführungsform der Hybridkraftanlage,
- Fig. 4: eine schematische Darstellung einer Kupplung zwischen Elektromotorrotor und dem Sockel.

### Bevorzugte Ausführung der Erfindung

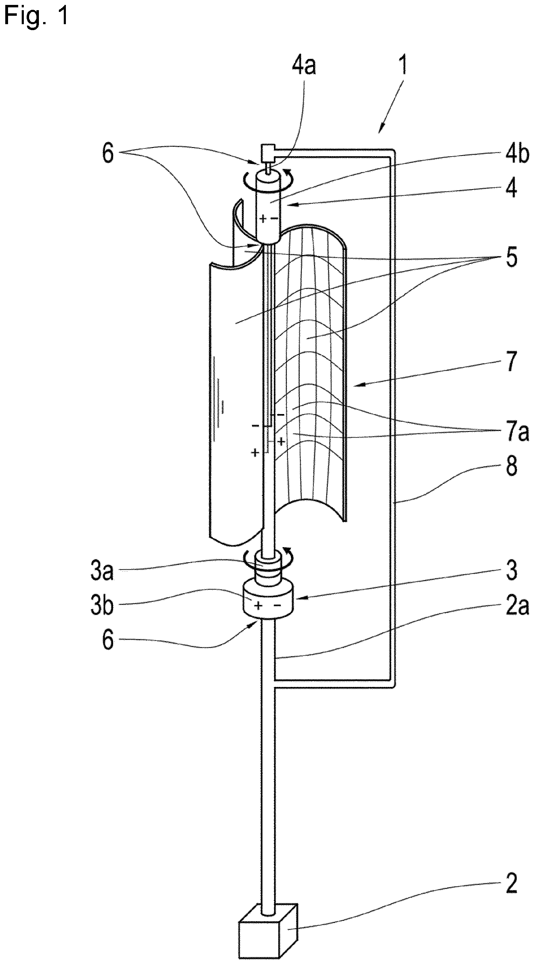

**Fig. 1** zeigt eine schematische Darstellung einer ersten Ausführungsform der Hybridkraftanlage 1, bei der der Elektromotor 4 oberhalb des Windradrotors 7 angeordnet ist, und der Generator 3 unterhalb des Windradrotors 7 angeordnet ist. Der Windradrotor 7 weist drei Windradflügel 5 auf, die jeweils zum Teil oder vollständig mit Photovoltaikzellen 7a belegt sind. Der Elektromotorrotor 4a weist hierbei über ein Rohrgestänge 8 eine feste Verbindung 6 zum Sockel 2 über das Sockelrohr 2a auf, die das Drehmoment des Elektromotorrotors 4a abstützt. Der Elektromotorstator 4b ist wiederum über eine feste Verbindung 6 mit dem Windradrotor 7 verbunden. Dies hat den Vorteil, dass die Energie der Photovoltaikzellen 7a direkt in den Elektromotorstator eingespeist werden kann. Dies geschieht über die Versorgungsleitungen 10, welche durch diese Konstruktion direkt in den Windradrotor 7 integriert werden können, ohne dass weitere aufwendige mechanische Konstruktionen wie Schleifringe zur Übertragung der elektrischen Energie aufgrund der Drehbarkeit des Windradrotors 7 notwendig wären.

Die Photovoltaikzellen können Teile des Rotors bedecken, den ganzen Rotor bedecken oder in den Rotor integriert werden. Insbesondere können die Photovoltaikzellen sowohl an der Vorderseite als auch an der Rückseite angeordnet sein. Für die Integration eignen sich am besten Photovoltaikzellen der 2. und 3. Generation, also Dünnschicht-Photovoltaikzellen oder gedruckte anorganische oder organische Photovoltaikzellen, sowie farbstoffsensibilisierte Photovoltaikzellen. Je nach Anordnung können aber auch klassische Photovoltaikzellen integriert werden. Mit neuen Technologien, insbesondere den druckbaren Photovoltaikzellen der 3. Generation, kann das gesamte Rotorblatt mit Photovoltaikzellen belegt werden.

An der Unterseite des Windradrotors 7 ist wiederum der Generator 3 angebracht. Der Generatorrotor 3a weist hier wiederum eine feste Verbindung 6 zum Windradrotor 7 auf. Der Generatorstator 3b hingegen weist eine feste Verbindung 6 zum Sockelrohr 2a und damit zum Sockel 2 auf. Diese Konstruktion stellt sicher, dass auch der Generator keine Schleifringe oder ähnliches benötigt, da der Stator fest mit dem Sockel verbunden ist, und der elektrische Anschluss zum Versorgungsnetz (nicht gezeigt) einfach hergestellt werden kann.

Die Funktionsweise ist nun wie folgt: Wenn Licht auf die Photovoltaikzellen 7a fällt, erzeugen diese elektrische Energie, die wiederum in den Elektromotor 4 eingespeist wird, der dadurch den Elektromotorrotor 4a gegenüber dem Elektromotorstator 4b in Drehung versetzt. Da der Elektromotorrotor 4a über das Rohrgestänge 8 fest mit dem Sockel verbunden ist, und sich daher nicht drehen kann, dreht sich in Folge der Elektromotorstator 4b zusammen mit dem Windradrotor 7, mit dem er ja fest verbunden ist. Bei Einspeisen einer elektrischen Energie durch die Photovoltaikzellen 7a wird nun also der Windradrotor 7 in Drehung versetzt. Dies geschieht ganz ohne Wind, rein mit der Energie der Sonne. Diese initiale Drehung reicht aus, um die Savonius-Rotorblätter des Windradrotors 7 auch bei schwachem Wind so schnell drehen zu lassen, dass der Windradrotor 7 die Energie des Windes nutzen kann und auch durch den Wind ein Drehmoment in Drehrichtung erfährt. Die Drehmomente des Windes und des durch die Photovoltaikzellen 7a gespeisten Elektromotors 4 addieren sich und lassen den Rotor schneller drehen, so dass der Generator 3 mehr Energie umsetzen und ins Versorgungsnetz einspeisen kann. Dabei sind die Photovoltaikzellen in den hierin gezeigten Ausführungsformen ausschließlich elektrisch mit dem Elektromotor 4 verbunden. Die Energiegewinnung in dem Generator 3 erfolgt somit ausschließlich durch die Rotation des Windrades bzw. des Windradrotors 7, wobei diese Rotation durch die in den Photovoltaikzellen 7a gewonnene Energie unterstützt wird.

Der Elektromotor und der Generator sind vorzugsweise so ausgeführt, dass der Rotor keine elektrische Versorgung benötigt. Diese Voraussetzung erfüllen eine Vielzahl von elektrischen Maschinen, die bekannteste hiervon ist die Asynchronmaschine, deren Rotor ein Kurzschlussläufer ist, dessen Strom über Induktion erzeugt wird. Aber es ist auch eine permanenterregte Synchronmaschine mit Permanentmagneten im Rotor als Elektromotor oder als Generator denkbar. Diese ist allerdings bevorzugt als Generator 3 einzusetzen, da sie im stromlosen Zustand ein Restmoment aufweist, welches den Windradrotor 7 an der Drehung hindern würde wenn es dunkel ist, und dieser Maschinentyp als Elektromotor 4 eingesetzt werden würde.

Prinzipiell sind natürlich auch andere Maschinentypen mit mechanischem oder elektronischem Kommutator einsetzbar. Bei einem mechanischem Kommutator ist der Wartungsaufwand wegen des Kommutators und der damit ebenfalls vorhandenen Motorkohlen höher. Bei einem elektronischem Kommutator ist im Elektromotor 4 eine elektronische Schaltung mit Sensoren vorzusehen, die ebenfalls von den Photovoltaikzellen 7a gespeist werden muss und die Kommutierung des Stromes vornimmt. Hier ist keinerlei Wartung vorgesehen, weswegen dieser Motortyp ebenfalls gut für die Aufgabe in der Hybridkraftanlage 1 geeignet ist.

In einer derart ausgeführten Konstruktion kann bei Verwendung von 2 beschienen Photovoltaikpaneelen von jeweils 380W Spitzenleistung bei Rotation der Windkraftanlage eine Spitzenleistung von insgesamt 500 W zusätzlich zu der durch die Windenergie gewonnene Leistung und abzüglich der Verluste durch die Drehbewegung erzeugt werden. Es versteht sich, dass bei Verwendung anderer Paneele oder an anderen Positionen die Spitzenleistung variieren kann.

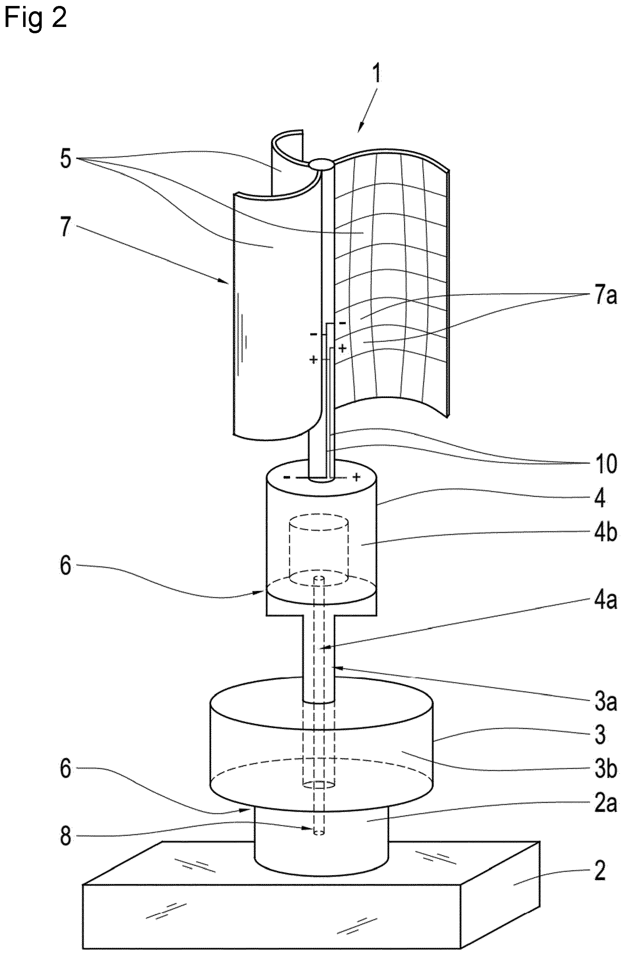

**Fig. 2** zeigt eine schematische Darstellung einer zweiten Ausführungsform der Hybridkraftanlage 1. Bei der zweiten Ausführungsform sind der Elektromotor 4 und der Generator 3 vorteilhaft übereinander unterhalb des Windradrotors 7 angeordnet, wobei der Elektromotor 4 direkt am Windradrotor 7 sitzt, und unterhalb des Elektromotors 4 dann der Generator 3 angeordnet ist. Um die Drehmomentabstützung 8 des Elektromotorrotors 4a gegenüber dem Sockel 2 besonders vorteilhaft und einfach zu gestalten, geht der Elektromotorrotor 4a durch den Generator 3 hindurch direkt zum Sockelrohr 2a, in dem er befestigt ist, also eine feste Verbindung aufweist. Der Generatorrotor 3a ist hierbei als Hohlwelle ausgeführt, durch die der Elektromotorrotor 4a koaxial hindurchreicht. Am Generatorrotor 3a wiederum ist der Elektromotorstator 4b angebracht. Hierzu ist der Generatorrotor 3a an seinem Ende als Glocke ausgestaltet, die den Elektromotorstator 4b hält. Der Generatorstator 3b wiederum ist wie in der vorherigen Ausführungsform fest mit dem Sockelrohr 2a und damit mit dem Sockel 2 verbunden, denn das Sockelrohr 2a endet wieder im Sockel 2, der z.B. aus Beton sein kann. Der Sockel 2 kann aber auch ein anderes geeignetes Fundament sein, z.B. der First eines Daches.

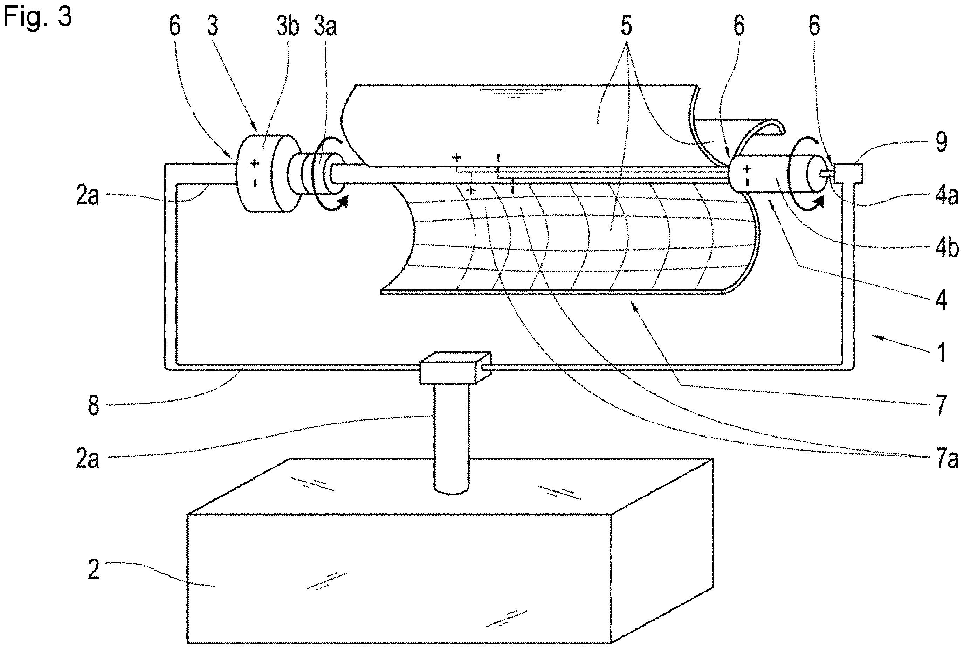

**Fig. 3** zeigt eine schematische Darstellung einer dritten Ausführungsform der Hybridkraftanlage 1. Diese Ausführungsform ist ähnlich zur ersten Ausführungsform, daher werden nur die Unterschiede zur ersten Ausführungsform beschrieben. In dieser Ausführungsform ist die Hybridkraftanlage 1 nicht mehr vertikal, sondern horizontal angeordnet. Dies hat den Vorteil, dass die Ausrichtung der Photovoltaikzellen 7a auf den Windradflügeln 5 des Windradrotors 7 besser ist, da bei drei Windradflügeln 5 immer zwei mehr oder weniger in Richtung Himmel, also zur Sonne hin ausgerichtet sind. Daher ist bei der dritten Ausführungsform die Effizienz der Photovoltaikzellen 7a verbessert. Diese Anordnung bringt noch einen weiteren Vorteil: Die vorher nur als Drehmomentstütze 8 dienende Konstruktion, z.B. aus Rohren, ist nun Teil des Sockels 2 bzw. des Sockelrohres 2a. Durch die Beidseitige Aufhängung ist die Konstruktion stabiler und leichter Herzustellen als die der zweiten Ausführungsform, und durch die Anordnung des Elektromotors 4 und des Generators 3 wie in der ersten Ausführungsform sind diese ebenfalls leicht und kostengünstig herzustellen, da keine speziellen Vorkehrungen wie eine Hohlwelle im Generator 3 vorzusehen sind. Die Funktionsweise ist wie bei den anderen Ausführungsformen: Der Elektromotor wird durch die Photovoltaikzellen gespeist und treibt den Windradrotor 7 an. Ein vorhandener Wind treibt ebenfalls den Windradrotor 7 an. Die beiden Drehungen und Drehmomente addieren sich, so dass mehr elektrische Energie vom Generator 3 erzeugt werden kann.

Bei allen Ausführungsformen kann der Generator 3 ein Gleichspannungsgenerator oder ein Wechselspannungsgenerator sein. Als Gleichspannungsgenerator kann er Energie für lokale Netze z.B. auf einem Segelboot oder in ein Gleichspannungsinselnetz auf einer Hütte oder ähnlichem liefern, als Wechselspannungsgenerator kann er Energie direkt ins Versorgungsnetz einspeisen.

Um die Effizienz in der Nacht bei Dunkelheit weiter zu verbessern, weist die Hybridkraftanlage 1 zusätzlich noch eine Kupplung 9 auf, die den Elektromotorrotor 4a von der Drehmomentstütze 8 und somit vom Sockelrohr 2a bzw. dem Sockel 2 abkuppeln kann. Dann läuft diese Seite frei, und die gesamte Energie des Windes kann möglichst verlustarm in elektrische Energie umgesetzt werden. Selbstverständlich können auch die erste und die zweite Ausführungsform mit solch einer Kupplung ausgestattet sein.

In einigen Ausführungsformen kann auch ein Relais zur elektronischen Zu- und Abschaltung des Elektromotors verwendet werden. Dieses Relais kann gleichzeitig auch zur Steuerung der Einkopplung der durch die Photovoltaikmodule gewonnene Energie bei Veränderung der Sonneneinstrahlungsintensität, beispielsweise aufgrund von Abschattung, Wolken oder Dämmerung, eingesetzt sein. Alternativ können mehrere Relais vorgesehen sein.

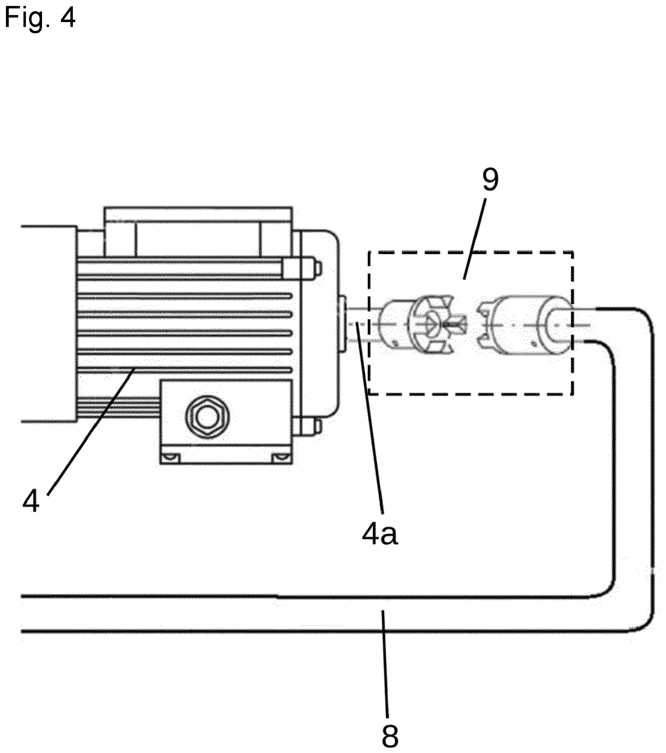

**Fig. 4** zeigt eine schematische Darstellung solch einer Anordnung mit dem Elektromotor 4, der Kupplung 9 zwischen Elektromotorrotor 4a und der Drehmomentstütze 8 und damit dem Sockel 2. Die Kupplung ist hier schematisch als Klauenkupplung dargestellt, aber selbstverständlich kann es sich auch um andere Kupplungsformen wie eine Reibscheibenkupplung, eine Glockenkupplung oder ähnliches handeln. Wichtig ist nur, dass die Kupplung in geschlossenem Zustand das Drehmoment des Elektromotors sicher kuppeln kann und in geöffnetem Zustand möglichst wenig Reibung erzeugt.

Die Kupplung 9 kann hierbei auch Teil eines Getriebes (nicht gezeigt) sein bzw. das Getriebe kann in der Art eines Schaltgetriebes die Kupplungsfunktion gleich mitliefern. Ein Getriebe ist von Vorteil, wenn die Drehzahl des Elektromotors sich nicht einfach auf die Drehzahl des Windradrotors anpassen lässt. Hier kann ein Getriebe zur Verbesserung des Wirkungsgrades beitragen. Natürlich können alle beschriebenen Ausführungsform ebenfalls ein Getriebe zwischen Elektromotorrotor 4a und dem Sockel 2 bzw. des Sockelrohres 2a oder der Drehmomentstütze 8 aufweisen. Ebenfalls kann ein Getriebe auch zwischen Generatorrotor 3a und Windradrotor 7 in allen beschriebenen Ausführungsformen vorgesehen sein.

### BEZUGSZEICHENLISTE

- 1: Hybridkraftanlage
- 2: Sockel
- 2a: Sockelstange
- 3: Generator
- 3a: Generatorrotor
- 3b: Generatorstator
- 4: Elektromotor
- 4a: Elektromotorrotor
- 4b: Elektromotorstator
- 5: Windradflügel
- 6: feste Verbindung
- 7: Windradrotor
- 7a: Photovoltaikzellen
- 8: Drehmomentabstützung
- 9: Kupplung
- 10: Elektrische Versorgungsleitungen

## Patentansprüche

1. Hybridkraftanlage (1) aufweisend:
- einen Windradrotor (7) mit mindestens zwei an dem Windradrotor (7) befestigten Windradflügeln (5), welche zumindest teilweise mit Photovoltaikmodulen (7a) belegt sind,
- einen Elektromotor (4) mit einem Elektromotorstator (4b) und einem Elektromotorrotor (4a), wobei der Elektromotorstator (4b) fest mit dem Windradrotor (7) gekoppelt ist, und der Elektromotorrotor (4a) mit einem Sockel (2, 2a, 8) des Windrades gekoppelt ist,
- einen Generator (3) mit einem Generatorstator (3b) und einem Generatorrotor (3a), wobei der Generatorstator (3b) fest mit dem Sockel (2) des Windrades gekoppelt ist, und der Generatorrotor (3a) mit dem Windradrotor (7) gekoppelt ist,
- wobei die Photovoltaikmodule (7a) eingerichtet sind, den Elektromotor (4) zu speisen, um den Windradrotor (7a) anzutreiben, und
- wobei der Generator (3) eingerichtet ist, die Drehung des Windradrotors (7) in elektrische Energie umzusetzen.

2. Hybridkraftanlage gemäß Anspruch 1, **dadurch gekennzeichnet, dass** zwischen dem Windradrotor (7) und dem Generatorrotor (3a) ein Getriebe zur Drehzahlanpassung angeordnet ist.

3. Hybridkraftanlage gemäß Anspruch 1 oder 2, **dadurch gekennzeichnet, dass** zwischen dem Elektromotorrotor (4a) und dem Sockel (2, 2a, 8) ein Getriebe und / oder eine Kupplung (9) zur Drehzahlanpassung angeordnet ist.

4. Hybridkraftanlage gemäß einem der Ansprüche 1 bis 3, **dadurch gekennzeichnet, dass** der Windradrotor (7) vertikal angeordnet ist.

5. Hybridkraftanlage gemäß einem der Ansprüche 1 bis 3, **dadurch gekennzeichnet, dass** der Windradrotor (7) horizontal angeordnet ist.

6. Hybridkraftanlage gemäß einem der Ansprüche 1 bis 5, **dadurch gekennzeichnet, dass** der Elektromotor (4) an der Oberseite bzw. einer Seite des Windradrotors (7) angeordnet ist, und der Generator (3) an der Unterseite bzw. an der anderen Seite des Windradrotors (7) angeordnet ist.

7. Hybridkraftanlage gemäß einem der Ansprüche 1 bis 6, **dadurch gekennzeichnet, dass** die Kopplung zwischen Elektromotorrotor (4a) und Sockel (2) über eine Konstruktion (8) erfolgt, die das Drehmoment des Elektromotors zum Sockel ableitet und Teil des Sockels ist.

8. Hybridkraftanlage gemäß einem der Ansprüche 1 bis 5, **dadurch gekennzeichnet, dass** der Elektromotor (4) und der Generator (3) direkt übereinander auf der sockelseitigen Seite des Windradrotors (7) angeordnet sind, wobei der Generatorrotor (3a) fest mit dem Elektromotorstator (4b) und der Elektromotorrotor (4a) fest mit dem Generatorstator (3b) und dem Sockel (2, 2a) verbunden ist.

9. Hybridkraftanlage gemäß Anspruch 8, **dadurch gekennzeichnet, dass** der Generator (3), der Elektromotor (4) und der Windradrotor (7) über zwei konzentrisch angeordnete Hohlachsen miteinander verbunden sind.

10. Hybridkraftanlage gemäß einem der Ansprüche 1 bis 9, **dadurch gekennzeichnet, dass** der Generator (3) ein Wechselstromgenerator oder ein Gleichstromgenerator ist.

11. Hybridkraftanlage gemäß einem der Ansprüche 1 bis 10, **dadurch gekennzeichnet, dass** der Elektromotor (4) mit den Photovoltaikmodulen (7a) elektrisch verbunden ist und der Generator (3) elektrisch verbindungsfrei zu den Photovoltaikmodulen (7a) ist.

12. Windkraftanlage gemäß einem der Ansprüche 1 bis 11, wobei wenigstens ein Relais vorgesehen ist, das zur Zu- bzw. Abschaltung der durch die Photovoltaikmodule (7a) gewonnenen elektrischen Energie zu dem Elektromotor (4) ausgebildet ist.
